# EUROPEAN PATENT APPLICATION

(11) **EP 4 130 110 A1**
(43) Date of publication of application: **08.02.2023**
(21) Application number: 21778897.5
(22) Date of filing: 23.03.2021
(51) Int. Cl.: C08J 5/18

(54) **HEAT-RESISTANT RELEASE SHEET AND METHOD FOR CARRYING OUT STEP INVOLVING HEATING AND MELTING OF RESIN**

(30) Priority: 02.04.2020 JP 2020067012
(71) Applicant: NITTO DENKO CORPORATION, Ibaraki-shi Osaka 567-8680 (JP)
(72) Inventor: MURAKI, Yuuzou, Ibaraki-shi, Osaka 567-8680 (JP); ARAI, Masahiro, Ibaraki-shi, Osaka 567-8680 (JP); AKIBA, Kurato, Ibaraki-shi, Osaka 567-8680 (JP); TACHIBANA, Toshimitsu, Ibaraki-shi, Osaka 567-8680 (JP)
(74) Representative: Müller-Boré & Partner Patentanwälte PartG mbB
(86) International application number: PCT/JP2021/012068
(87) International publication number: WO 2021/200409

(57) **Abstract**

A heat-resistant release sheet provided is a sheet configured to be disposed, when a resin or a target including a resin is used in a step involving heating and melting of the resin, between the resin or the target and a member to be brought into contact with the resin or the target in the step to prevent direct contact between the resin or the target and the member. The above sheet includes a skived sheet including polytetrafluoroethylene (PTFE) or a modified PTFE. A content of a tetrafluoroethylene (TFE) unit in the modified PTFE is 99 mass% or more. In each of two directions being in-plane directions of the heat-resistant release sheet and being perpendicular to each other, a rate of dimensional shrinkage induced by heating at 175°C for 30 minutes is more than 0%. The above sheet includes the skived sheet including the heat-resistant resin but is suitable for preventing, in the above step, occurrence of problems attributable to inclusion of the skived sheet.

## Description

### TECHNICAL FIELD

The present invention relates to a heat-resistant release sheet and a method for performing a step involving heating and melting of a resin using the heat-resistant release sheet.

### BACKGROUND ART

Fluorine resins are known as heat-resistant resins. Patent Literature 1 discloses a skived sheet formed of polytetrafluoroethylene (hereinafter referred to as "PTFE"), which is a kind of fluorine resin. The PTFE sheet which is a heat-resistant resin sheet is supposed to be used at high temperatures.

### CITATION LIST

### Patent Literature

Patent Literature 1: JP 2001-341138 A

### SUMMARY OF INVENTION

### Technical Problem

A step involving heating and melting of a resin is performed, for example, in melt-molding of the resin using a mold and in a thermocompression treatment of a target including the resin using a thermocompression apparatus. It is conceivable that in the step, a heat-resistant release sheet is disposed between the resin or the target including the resin and a member to be brought into contact with the resin or the target to prevent direct contact between the resin or the target and the member. It is also conceivable that a heat-resistant resin sheet, such as a skived sheet formed of PTFE, is used as the heat-resistant release sheet. However, studies by the present inventors revealed that when a skived sheet is used, a defect extending in a line shape on a surface of a formed body obtained by melt-molding can occur or a thermocompression treatment can be less uniformly performed. It should be noted that not only skived sheets but also cast sheets produced by drying and sintering coating films formed of a PTFE dispersion are PTFE sheets. Cast sheets are free of the above problems.

The present invention aims to provide a heat-resistant release sheet configured to be disposed, when a resin or a target including a resin is used in a step involving heating and melting of the resin, between the resin or the target and a member to be brought into contact with the resin or the target in the step to prevent direct contact between the resin or the target and the member. The heat-resistant release sheet includes a skived sheet including a heat-resistant resin but is suitable for preventing, in the above step, occurrence of problems, such as occurrence of the above defect, the above decrease in uniformity, and the like, attributable to inclusion of the skived sheet.

### Solution to Problem

The present invention provides a heat-resistant release sheet,
the heat-resistant release sheet being configured to be disposed, when a resin or a target including a resin is used in a step involving heating and melting of the resin, between the resin or the target and a member to be brought into contact with the resin or the target in the step to prevent direct contact between the resin or the target and the member, the heat-resistant release sheet including
a skived sheet including polytetrafluoroethylene (PTFE) or a modified PTFE, wherein
a content of a tetrafluoroethylene (TFE) unit in the modified PTFE is 99 mass% or more, and
in each of two directions being in-plane directions of the heat-resistant release sheet and being perpendicular to each other, a rate of dimensional shrinkage induced by heating at 175°C for 30 minutes is more than 0%.

In another aspect, the present invention provides a method for performing a step involving heating and melting of a resin, the method including
performing the step in a state where a heat-resistant release sheet is disposed between the resin used in the step or a target including the resin and used in the step and a member to be brought into contact with the resin or the target in the step to prevent direct contact between the resin or the target and the member by the heat-resistant release sheet, wherein
the heat-resistant release sheet is the above heat-resistant release sheet of the present invention.

### Advantageous Effects of Invention

Studies by the present inventors have revealed that the problems which can occur when a skived sheet is used are due to occurrence of a wrinkle line extending in a particular direction, typically the MD, in the skived sheet by heating to melt a resin and that the above wrinkle is considered attributable to a specific production method for a skived sheet. In production of a skived sheet, a raw material powder is preformed into, for example, a columnar shape. During the preforming, a strong pressure is applied in one direction. This direction corresponds to the above particular direction in which a wrinkle in a resulting skived sheet can occur. A compression strain resulting from the pressure applied during the preforming remains in the skived sheet, and is released by the above heating. A wrinkle line is thought to occur thereby. On the other hand, in each of two directions being in-plane directions of the heat-resistant release sheet of the present invention and being perpendicular to each other, a rate of dimensional shrinkage induced by heating (corresponding to typical heating for melting a resin) at 175°C for 30 minutes is more than 0%. This means that the above compression strain is prevented from remaining in the heat-resistant release sheet of the present invention. Therefore, the heat-resistant release sheet of the present invention can prevent, in the above step, occurrence of problems, such as occurrence of the above defect, the above decrease in uniformity, and the like, attributable to inclusion of the skived sheet.

### BRIEF DESCRIPTION OF DRAWINGS

FIG. 1 is a cross-sectional view schematically showing an example of the heat-resistant release sheet of the present invention.
FIG. 2 is a schematic diagram illustrating an example of melt-molding a resin using the heat-resistant release sheet of the present invention.
FIG. 3 is a schematic diagram illustrating an example of a thermocompression treatment using the heat-resistant release sheet of the present invention.

### DESCRIPTION OF EMBODIMENTS

Hereinafter, embodiments of the present invention will be described with reference to the drawings. The present invention is not limited to the following embodiments.

### [Heat-resistant release sheet]

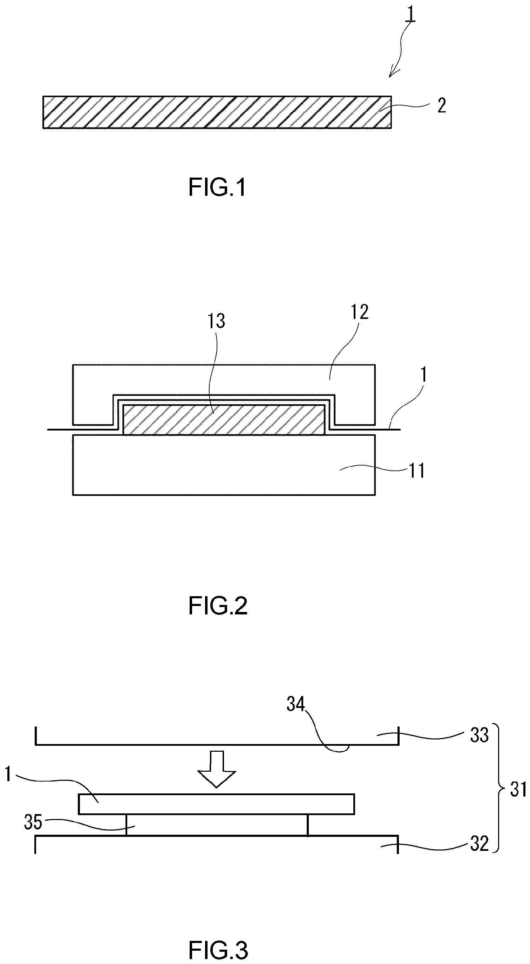

FIG. 1 shows a heat-resistant release sheet of the present embodiment. A heat-resistant release sheet 1 of FIG. 1 is formed of a skived sheet 2 formed of PTFE. The heat-resistant release sheet 1 of FIG. 1 has a single-layer structure of the skived sheet 2. The heat-resistant release sheet 1 has high heat resistance and high flexibility derived from the PTFE included in the skived sheet 2. It should be noted that whether a sheet is a skived sheet can be determined by confirming a linearly extending flaw (known as a skived streak by persons skilled in the art) specific to a skived sheet by observation of an enlarged surface of the sheet. A microscope such as an optical microscope and a surface property evaluation apparatus can be used for observation of the enlarged surface. When a skived sheet is obtained by skiving, resin shavings are accumulated on a skiving blade, leaving a linear scratch on a surface of the sheet. A skived streak is made thereby. A skived streak generally extends in an MD of the skived sheet 2. The MD of the skived sheet 2 in a strip shape is generally a longitudinal direction of the sheet.

In each of two directions being in-plane directions of the heat-resistant release sheet 1 and being perpendicular to each other, a rate of dimensional shrinkage induced by heating at 175°C for 30 minutes (hereinafter referred to as "rate of dimensional shrinkage") is more than 0%. The two directions are typically the MD and a TD of the skived sheet 2. The TD of the skived sheet 2 in a strip shape is generally a width direction of the sheet. The rate of dimensional shrinkage is given by an expression (X₀ - X₁)/X₀ × 100 (%), where X₀ and X₁ are respectively a pre-heating dimension and a post-heating dimension and are measured for the heat-resistant release sheet 1 by leaving the sheet 1 to stand still under heating conditions, namely, 175°C and 30 minutes. In each of the above two directions, the rate of dimensional shrinkage may be 0.5% or more, or may be 1.0% or more, 1.5% or more, 1.7% or more, 1.9% or more, 2.0% or more, 3.0% or more, 4.0% or more, or even 5.0% or more. In each of the above two directions, the upper limit of the rate of dimensional shrinkage is, for example, 10% or less, and may be 8.0% or less, 7.0% or less, 6.0% or less, 5.0% or less, 4.0% or less, 3.0% or less, 2.5% or less, 2.0% or less, 1.9% or less, or even 1.7% or less. The rates of dimensional shrinkage in the above two directions can be different. The rates of dimensional shrinkage in the above two directions can each independently be in one range selected from the above preferred ranges described above. Additionally, a difference between the rates of dimensional shrinkage in the above two directions may be less than 5.0%, 4.5% or less, 4.0% or less, 3.5% or less, 3.1% or less, 3.0% or less, 2.5% or less, 2.0% or less, 1.5% or less, 1.0% or less, 0.7% or less, 0.5% or less, or even 0.3% or less. The rate of dimensional shrinkage of a conventional skived sheet in the TD is 0% or less. In other words, heating releases a compression strain remaining in a conventional skived sheet, expanding the sheet in the TD. On the other hand, the rate of dimensional shrinkage of the heat-resistant release sheet 1 may be greater in the TD than in the MD.

The heat-resistant release sheet 1 of FIG. 1 includes the skived sheet 2 including PTFE. However, the heat-resistant release sheet 1 may include the skived sheet 2 including a modified PTFE. The skived sheet 2 including a modified PTFE, as well as the skived sheet 2 including PTFE, has high heat resistance and high flexibility, and can be produced by the same production method as that for the skived sheet 2 including PTFE. The modified PTFE is a copolymer of TFE and a modified comonomer. The content of a tetrafluoroethylene (TFE) unit in the copolymer needs to be 99 mass% or more so that the copolymer can be classified as the modified PTFE. The modified PTFE is, for example, a copolymer of TFE and at least one modified comonomer selected from the group consisting of ethylene, perfluoroalkylvinyl ether, and hexafluoropropylene.

The skived sheet 2 is preferably a sintered sheet including PTFE having been sintered or the modified PTFE having been sintered. In the present specification, sintering of PTFE or the modified PTFE means heating of the PTFE or modified PTFE obtained by polymerization to a temperature equal to or higher than its melting point (327°C for PTFE), for example, to 340 to 380°C.

The thickness of the heat-resistant release sheet 1 is, for example, 10 µm or more, and may be 20 µm or more, 25 µm or more, 30 µm or more, 40 µm or more, or even 50 µm or more. The upper limit of the thickness is, for example, 500 µm or less, and may be 200 µm or less, or even 100 µm or less.

The heat-resistant release sheet 1 may have a linear thermal expansion coefficient α of 150 × 10⁻⁶/°C or less in a temperature range of 25°C to 175°C in each of the above two directions, or may have a linear thermal expansion coefficient α of 125 × 10⁻⁶/°C or less, 120 × 10⁻⁶/°C or less, 110 × 10⁻⁶/°C or less, 100 × 10⁻⁶/°C or less, 90 × 10⁻⁶1°C or less, 50 × 10⁻⁶/°C or less, 30 × 10⁻⁶/°C or less, or even 0 × 10⁻⁶/°C or less in the temperature range of 25°C to 175°C in each of the above two directions. The linear thermal expansion coefficient α in the MD may be 125 × 10⁻⁶/°C or less, 120 × 10⁻⁶/°C or less, 110 × 10⁻⁶/°C or less, 100 × 10⁻⁶/°C or less, or even 90 × 10⁻⁶/°C or less and may be 0 × 10⁻⁶/°C or more, 25 × 10⁻⁶/°C or more, or even 50 × 10⁻⁶/°C or more. The linear thermal expansion coefficient α in the TD may be 125 × 10⁻⁶/°C or less, 120 × 10⁻⁶/°C or less, 110 × 10⁻⁶/°C or less, 100 × 10⁻⁶/°C or less, 90 × 10⁻⁶/°C or less, 50 × 10⁻⁶/°C or less, 30 × 10⁻⁶/°C or less, or even 0 × 10⁻⁶/°C or less and may be -400 × 10⁻⁶/°C or more, -300 × 10⁻⁶/°C or more, or even -200 × 10⁻⁶/°C or more. The linear thermal expansion coefficient α in the TD may be a negative value. The linear thermal expansion coefficient α of the heat-resistant release sheet 1 can be determined by thermomechanical analysis (TMA). TMA may be performed under the following conditions. An average of values obtained by measuring at least five specimens can be defined as the linear thermal expansion coefficient α.
Measurement temperature range: 25°C to 175°C
Mode: tensile mode
Specimen: 4 mm in width × 20 mm in length
Tensile direction: longitudinal direction of specimen
Tensile load: 2 gf
Temperature increase rate: 5°C/min
Atmosphere around specimen during measurement: "Atmosphere around specimen" defined in Japanese Industrial Standards (JIS) K 7197: 1991 "Testing method for linear thermal expansion coefficient of plastics by thermomechanical analysis"

The heat-resistant release sheet 1 may have a tensile strength of 30 MPa or more and a maximum tensile elongation of 250% or more in each of the above two directions. The tensile strength may be 35 MPa or more, 40 MPa or more, 45 MPa or more, 50 MPa or more, or even 55 MPa or more. The upper limit of the tensile strength is, for example, 100 MPa or less. The maximum tensile elongation may be 275% or more, 300% or more, 325% or more, 350% or more, 400% or more, or even 450% or more. The upper limit of the maximum tensile elongation is, for example, 600% or less. The tensile strength and the maximum tensile elongation can be defined by any combination of the above ranges. The heat-resistant release sheet 1 having a tensile strength and a maximum tensile elongation in the above ranges can be, for example, more reliably and stably fed by conveyance for a step involving heating and melting of a resin.

The tensile strength and the maximum tensile elongation of the heat-resistant release sheet 1 can be determined by a tensile test using a tensile tester. The shape of a specimen is, for example, the shape of a No. 3 dumbbell defined in JIS K 6251: 1993. When the above specimen is used, the measurement conditions are, for example, as follows: the test length of a dumbbell of the specimen is 20 mm, the chuck-to-chuck distance is 35 mm, and the tensile rate is 200 mm/min. The maximum tensile elongation can be calculated from the above pre-test (original) test length of a dumbbell and the test length of a dumbbell at break. The measurement temperature is , for example, 25±10°C.

An additional layer may be disposed on at least one principal surface of the heat-resistant release sheet 1. However, it is preferable that no additional layer be disposed on the principal surfaces when a good heat conductivity is required of the heat-resistant release sheet 1. In other words, the heat-resistant release sheet 1 may consist of a single layer.

No surface treatment may be performed for at least one principal surface, preferably both principal surfaces, of the heat-resistant release sheet 1. Examples of the surface treatment include an adhesiveness improvement treatment for improving the adhesiveness of a principal surface of a PTFE sheet or a modified PTFE sheet (the adhesiveness to other articles). Examples of the adhesiveness improvement treatment include a plasma treatment, a sputtering treatment, and a sodium treatment, and the adhesiveness improvement treatment is particularly a plasma treatment.

The heat-resistant release sheet 1 is preferably a non-porous sheet. The heat-resistant release sheet 1 may be a sheet having no hole communicating both principal surfaces thereof at least in a region of use. The heat-resistant release sheet 1 may be an impermeable sheet that allows no fluid, such as water, to permeate in the thickness direction thereof because of high liquid repellency (water repellency and oil repellency) of the PTFE or the modified PTFE. Alternatively, the heat-resistant release sheet 1 may be an insulating sheet (a nonconductive sheet) because of high insulating properties of the PTFE or the modified PTFE. The insulating property is expressed, for example, by a surface resistivity of 1 × 10¹⁴ Ω/□ or more. The surface resistivity may be 1 × 10¹⁵ Ω/□ or more, 1 × 10¹⁶ Ω/□ or more, or even 1 × 10¹⁷ Ω/□ or more. The heat-resistant release sheet 1 may include electrically conductive materials such as carbon black, an electrically conductive polymer, and an electrically conductive metal oxide. In this case, the heat-resistant release sheet 1 can have a function, such as an antistatic function, derived from the electrically conductive material. The surface resistivity of the heat-resistant release sheet 1 including the electrically conductive material is, for example, 1 × 10¹² Ω/□ or less, and may be 1 × 10⁸ Ω/□ or less or 1 × 10⁴ Ω/□ or less.

The heat-resistant release sheet 1 is in the shape of, for example, a polygon such as a square or a rectangle, a circle, an oval, or a strip. The polygon may have a rounded corner. The shape of the heat-resistant release sheet 1 is, however, not limited to the above examples. The polygonal, circular, or oval heat-resistant release sheet 1 can be distributed in the form of a sheet, and the strip-shaped heat-resistant release sheet 1 can be distributed in the form of a winding body (roll) including the sheet 1 wound around a winding core. The width of the strip-shaped heat-resistant release sheet 1 and that of the winding body including the strip-shaped wound heat-resistant release sheet 1 can be set to any values.

### [Method for producing heat-resistant release sheet]

An example of a method for producing the heat-resistant release sheet 1 will be described hereinafter. However, the method for producing the heat-resistant release sheet 1 is not limited to the following examples.

First, a PTFE powder (molding powder) is charged into a mold, and a given pressure is applied to the powder in the mold for a given period of time to preform the powder. The preforming can be performed at ordinary temperature. The inner space of the mold preferably has a columnar shape so that later-described skiving using a skiving lathe can be performed. In this case, the given pressure is generally applied in a height direction of the column. Moreover, in this case, a columnar preform and a columnar PTFE block can be obtained. When the PTFE block has a columnar shape, a skiving lathe, which continuously rotates the block and skives a surface thereof, can be used and thus the heat-resistant release sheet 1 can be efficiently formed. Next, the resulting preform is taken out of the mold and sintered at a temperature equal to or higher than the melting point (327°C) of PTFE for a given period of time to obtain a PTFE block. The obtained PTFE block is skived to a given thickness to obtain a PTFE sheet that is a skived sheet. The obtained PTFE sheet is stretched in the width direction (TD) to obtain the skived sheet 2 which includes PTFE and which is a sheet uniaxially stretched in the width direction. The stretching releases a compression strain in the TD. The obtained skived sheet 2 may be directly used as the heat-resistant release sheet 1, or may be used as the heat-resistant release sheet 1, for example, after a given treatment or after an additional layer is laminated thereon. A tenter stretching apparatus can be used for the stretching. The stretching ratio is, for example, 1.05 to 1.2, and may be 1.1 to 1.5. When the stretching ratio is in the above range, the skived sheet 2 having no hole communicating both principal surfaces thereof can be more reliably obtained and occurrence of a pinhole by stretching can be reduced. The stretching temperature is, for example, 150 to 330°C, and may be 200 to 300°C. By means of the above production method, the thicknesses of the heat-resistant release sheet 1 are relatively easily controlled and the heat-resistant release sheet 1 can be formed in the shape of a strip, too. Furthermore, the skived sheet 2 including the modified PTFE can be formed by the above method with the use of a modified PTFE powder instead of the PTFE powder.

### [Use of heat-resistant release sheet]

The heat-resistant release sheet 1 can be used in a step involving heating and melting of a resin. Examples of the step include melt-molding of the resin using a mold and a thermocompression treatment of a target including the resin using a thermocompression apparatus. However, the step involving heating and melting of a resin is not limited to the above examples as long as a member to be brought into contact with the resin or the target including the resin is used in the step.

FIG. 2 shows one example of melt-molding of a resin using a mold. In the example of FIG. 2, the heat-resistant release sheet 1 is used as a sheet disposed between a mold (upper mold in FIG. 2) 12 and a resin 13 at the time of melt-molding of the resin 13 to prevent direct contact between the mold 12 and the resin 13. The mold 12 is a member in contact with the resin at the time of melt-molding. The melt-molding in the example of FIG. 2 can be performed by feeding the resin 13 between a mold (lower mold) 11 and the mold 12 which are in pairs and joining the molds 11 and 12 together. At that time, the heat-resistant release sheet 1 may be sucked to be adhered to an inner surface of the mold 12. The resin 13 fed may be a solid such as a pellet or may be a molten resin. The molten resin is generally fed after the molds 11 and 12 are joined together. However, the embodiment of melt-molding a resin using the heat-resistant release sheet is not limited to the above examples.

The heat-resistant release sheet 1 may be fed and disposed between the molds 11 and 12 by conveyance. The heat-resistant release sheet 1 fed and disposed by conveyance is, for example, in the shape of a strip. In other words, the step involving heating and melting of a resin may be performed by feeding the strip-shaped heat-resistant release sheet 1 between the molds by conveyance.

FIG. 3 shows one example of the thermocompression treatment using a thermocompression apparatus. In the example of FIG. 3, the heat-resistant release sheet 1 is used as a sheet disposed between a thermocompression face 34 of a thermocompression apparatus 31 and a target 35 including a resin at the time of a thermocompression treatment of the target 35 using the thermocompression apparatus 31 to prevent direct contact between the thermocompression face 34 and the target 35. The thermocompression apparatus 31 of FIG. 3 includes a stage 32 and a thermocompression head 33 having the thermocompression face 34. The thermocompression head 33 is a member to be brought into contact with the target 35 at the time of the thermocompression treatment. The heat-resistant release sheet 1 is disposed between the thermocompression head 33 and the target 35. The thermocompression treatment in the example of FIG. 3 can be performed by bringing the thermocompression head 33 and the stage 32 close to each other (typically by lowering the thermocompression head 33) with the target 35 placed on the stage 32. The thermocompression treatment is, for example, thermocompression bonding or hot pressing of the target 35.

The heat-resistant release sheet 1 may be fed and disposed between the thermocompression face 34 and the target 35 by conveyance. The heat-resistant release sheet 1 fed and disposed by conveyance may be in the shape of a strip. In other words, the step involving heating and melting of a resin may be performed by feeding the strip-shaped heat-resistant release sheet 1 to a thermocompression apparatus by conveyance.

A temperature (a use temperature of the heat-resistant release sheet 1) at which the resin is heated and molten in the above step is, for example, 150°C or higher, and may be 160°C or higher, 170°C or higher, or even 175°C or higher. However, the use temperature of the heat-resistant release sheet 1 is not limited to the above examples. Since the heat-resistant release sheet 1 includes the skived sheet 2 including highly heat-resistant PTFE or modified PTFE, the use temperature may be 200°C or higher, 250°C or higher, 275°C or higher, or even 300°C or higher, which are temperatures higher than the above examples.

### [Method for performing step involving heating and melting of resin]

The step involving heating and melting of a resin can be performed using the heat-resistant release sheet 1. The method includes performing the step in a state where the heat-resistant release sheet 1 is disposed between the resin used in the step or a target including the resin and used in the step and a member to be brought into contact with the resin or the target in the step to prevent direct contact between the resin or the target and the member by the sheet 1.

### [Melt-molding method]

A resin can be melt-molded using the heat-resistant release sheet 1. The melt-molding method includes melt-molding the resin 13 in a state where the heat-resistant release sheet 1 is disposed between the mold 12 and the resin 13 to prevent direct contact between the mold 12 and the resin 13 by the sheet 1 (refer to FIG. 2).

### [Method for producing melt-molded body]

A melt-molded body including a resin can be produced using the heat-resistant release sheet 1. The production method includes obtaining a melt-molded body of a resin by melt-molding the resin 13 in a state where the heat-resistant release sheet 1 is disposed between the mold 12 and the resin 13 to prevent direct contact between the mold 12 and the resin 13 by the sheet 1 (refer to FIG. 2).

### [Thermocompression treatment method]

A thermocompression treatment of the target 35 can be performed using the heat-resistant release sheet 1. The thermocompression treatment method is a method of a thermocompression treatment of the target 35 using a thermocompression apparatus, and includes performing the thermocompression treatment in a state where the heat-resistant release sheet 1 is disposed between the target 35 and the thermocompression face 34 to prevent direct contact between the target 35 and the thermocompression face 34 by the sheet 1 (refer to FIG. 3).

### [Method for producing thermocompressed body]

A thermocompressed body can be produced using the heat-resistant release sheet 1. The production method is a method for producing a thermocompressed body using a thermocompression apparatus, and includes obtaining a thermocompressed body of the target 35 by performing a thermocompression treatment in a state where the heat-resistant release sheet 1 is disposed between the target 35 and the thermocompression face 34 to prevent direct contact between the target 35 and the thermocompression face 34 by the sheet 1. The thermocompression treatment is, for example, thermocompression bonding or hot pressing of the target 35, and a thermocompressionbonded body or a hot-pressed body can be obtained thereby (refer to FIG. 3).

### EXAMPLES

Hereinafter, the present invention is described in more detail with reference to examples. The present invention is not limited to the following examples.

First, the methods for evaluating heat-resistant release sheets produced in examples will be described.

### [Thickness]

The thickness was determined as an average of values measured at any three points at 25°C using a digital micrometer (minimum increment: 0.001 mm).

### [Rate of dimensional shrinkage (175°C, 30 minutes)]

A rate of dimensional shrinkage induced by heating at 175°C for 30 minutes was evaluated in the following manner. First, dimensions (pre-heating dimensions X₀) in the MD and the TD were measured for a heat-resistant release sheet to be evaluated. Next, the heat-resistant release sheet was put in a heating bath, left to stand still at 175°C for 30 minutes, and then cooled to 25°C. Dimensions (post-heating dimensions X₁) thereof in the MD and the TD were measured at 25°C. The rate of dimensional shrinkage in each direction was determined by the expression (X₀ - X₁)/X₀ × 100 (%) from the measured dimensions X₀ and X₁. A caliper was used to measure the dimensions, and the maximum dimension in each direction were defined as X₀ and X₁.

### [Linear thermal expansion coefficient α (25 to 175°C)]

The linear thermal expansion coefficient α in the temperature range of 25°C to 175°C was evaluated by the above method by TMA. Each heat-resistant release sheet was evaluated in the MD and the TD. Specimens were in the shape of a rectangle having a width of 4 mm and a length of 20 mm. The number of specimens used for the evaluation was five.

### [Tensile strength and maximum tensile elongation]

The tensile strength (tensile strength at break) and the maximum tensile elongation were determined by a tensile test using a tensile tester (AG-I manufactured by Shimadzu Corporation). Each heat-resistant release sheet was evaluated in the MD and the TD. The shape of a specimen was the shape of a No. 3 dumbbell (test length of the dumbbell: 20 mm) defined in JIS K 6251: 1993. The measurement conditions were as follows; the measurement temperature was 25°C, the chuck-to-chuck distance was 35 mm, and the tensile rate was 200 mm/min. The maximum tensile elongation was calculated from the above pre-test (original) test length of the dumbbell and the test length of the dumbbell at break.

### [Wrinkle in sheet set on mold]

Whether there is a wrinkle in each heat-resistant release sheet set on a mold was evaluated using a transfer molding apparatus. A cavity of a mold was in the shape of a rectangular parallelepiped having a width of 50 mm, a length of 50 mm, and a depth of 0.7 mm. A roll of each heat-resistant release sheet processed into a 170-mm-wide strip was loaded into the apparatus, and the sheet was fed to the mold heated to 175°C by conveyance to be vacuum-sucked to the mold. The vacuum-sucked heat-resistant release sheet was visually examined for a wrinkle.

### (Example 1)

A PTFE powder (POLYFLON PTFE M-18 manufactured by DAIKIN INDUSTRIES, LTD.) was charged into a cylindrical mold and preformed at a temperature of 23°C and a pressure of 8.5 MPa for a pressure application time of 1 hour. Next, the resulting preform was taken out of the mold and sintered at 370°C for 24 hours to obtain a columnar PTFE block having a height of 300 mm and an outer diameter of 470 mm. Then, the obtained PTFE block was skived using a skiving lathe to obtain a skived sheet (thickness: 55 µm; strip-shaped) formed of PTFE. Next, the obtained skived sheet was stretched in its width direction (TD) to obtain a heat-resistant release sheet (thickness: 50 µm) of Example 1. The skived sheet was stretched using a tenter stretching apparatus at a stretching temperature of 280°C and a stretching ratio of 1.1. The direction in which the pressure was applied during the preforming was the TD of the obtained sheet.

### (Example 2)

A skived sheet (thickness: 55 µm; strip-shaped) formed of a modified PTFE was obtained in the same manner as in Example 1, except that a modified PTFE powder (Dyneon TFM, modified PTFE, TFM 1700 manufactured by 3M Company; content of TFE unit: 99 mass% or more) was used instead of the PTFE powder. Next, the obtained skived sheet was stretched in its width direction (TD) to obtain a heat-resistant release sheet (thickness: 51 µm) of Example 2. The stretching method and conditions were the same as those for Example 1.

### (Example 3)

A heat-resistant release sheet (thickness: 49 µm) of Example 3 was obtained in the same manner as in Example 2, except that a skiving thickness was changed so that the skived sheet had a thickness of 70 µm before the stretching and that the stretching ratio was changed to 1.2.

### (Comparative Example 1)

A 50-µm-thick skived sheet formed of PTFE was obtained in the same manner as in Example 1, except that the skiving thickness was changed. This sheet was employed as a heat-resistant release sheet of Comparative Example 1 without stretching in its width direction.

### (Comparative Example 2)

A 50-µm-thick skived sheet formed of a modified PTFE was obtained in the same manner as in Example 2, except that the skiving thickness was changed. This sheet was employed as a heat-resistant release sheet of Comparative Example 2 without stretching in its width direction.

The evaluation results are collectively shown in Table 1 below.

**[Table 1]**

| | | Example | | | Comparative Example | |
|---|---|---|---|---|---|---|
| | | 1 | 2 | 3 | 1 | 2 |
| Material of sheet | | PTFE | Modified PTFE | Modified PTFE | PTFE | Modified PTFE |
| Stretching ratio | | 1.1 | 1.1 | 1.2 | N/A | N/A |
| Thickness (µm) | | 50 | 51 | 49 | 50 | 50 |
| Linear thermal expansion coefficient α (10⁻⁶/°C) | MD | 103.1 | 87.6 | 100.1 | -0.4 | -6.5 |
| | TD | 121.4 | 23.1 | -170.1 | 332.8 | 206.9 |
| Tensile strength (MPa) | MD | 56 | 54 | 52 | 50 | 65 |
| | TD | 44 | 43 | 48 | 37 | 43 |
| Maximum tensile elongation (%) | MD | 325 | 455 | 463 | 310 | 390 |
| | TD | 308 | 400 | 380 | 320 | 412 |
| Dimensional shrinkage rate (%) (175°C, 30 min) | MD | 1.5 | 1.7 | 1.9 | 3.5 | 2.9 |
| | TD | 1.0 | 2.0 | 5.0 | -1.5 | -1.0 |
| Wrinkle in sheet set on mold | | No wrinkle | No wrinkle | No wrinkle | Wrinkle | Wrinkle |

As shown in Table 1, for the heat-resistant release sheets of Comparative Examples having a negative rate of dimensional shrinkage in the TD, a wrinkle line extending in the MD occurred in each sheet set on the mold. On the other hand, no wrinkle occurred in the two directions of the heat-resistant release sheets of Examples having a dimensional shrinkage rate of more than 0% in each of the MD and the TD.

### INDUSTRIAL APPLICABILITY

The heat-resistant release sheet of the present invention can be used in a step involving heating and melting of a resin. Examples of the step include melt-molding of the resin using a mold and a thermocompression treatment of a target including a resin using a thermocompression apparatus.

## Claims

1. A heat-resistant release sheet,
the heat-resistant release sheet being configured to be disposed, when a resin or a target including a resin is used in a step involving heating and melting of the resin, between the resin or the target and a member to be brought into contact with the resin or the target in the step to prevent direct contact between the resin or the target and the member, the heat-resistant release sheet comprising
a skived sheet including polytetrafluoroethylene (PTFE) or a modified PTFE, wherein
a content of a tetrafluoroethylene (TFE) unit in the modified PTFE is 99 mass% or more, and
in each of two directions being in-plane directions of the heat-resistant release sheet and being perpendicular to each other, a rate of dimensional shrinkage induced by heating at 175°C for 30 minutes is more than 0%.

2. The heat-resistant release sheet according to claim 1, wherein a difference between the rates of dimensional shrinkage in the two directions is less than 5.0%.

3. The heat-resistant release sheet according to claim 1 or 2, wherein the two directions are an MD and a TD of the skived sheet.

4. The heat-resistant release sheet according to any one of claims 1 to 3, having a linear thermal expansion coefficient of 150 × 10⁻⁶/°C or less in a temperature range of 25°C to 175°C in each of the two directions.

5. The heat-resistant release sheet according to any one of claims 1 to 4, having a tensile strength of 30 MPa or more and a maximum tensile elongation of 250% or more in each of the two directions.

6. A method for performing a step involving heating and melting of a resin, the method comprising
performing the step in a state where a heat-resistant release sheet is disposed between the resin used in the step or a target including the resin and used in the step and a member to be brought into contact with the resin or the target in the step to prevent direct contact between the resin or the target and the member by the heat-resistant release sheet, wherein
the heat-resistant release sheet is the heat-resistant release sheet according to any one of claims 1 to 5.
